# EUROPEAN PATENT APPLICATION

(11) **EP 4 517 459 A1**
(43) Date of publication of application: **05.03.2025**
(21) Application number: 23803466.4
(22) Date of filing: 27.04.2023
(51) Int. Cl.: G05B 19/418, B25J 5/00, G05D 1/02

(54) **PRODUCTION SYSTEM, PRODUCTION SYSTEM MANAGEMENT METHOD, AND PROGRAM RECORDING MEDIUM HAVING PROGRAM FOR PRODUCTION SYSTEM MANAGEMENT DEVICE RECORDED THEREON**

(30) Priority: 11.05.2022 JP 2022078225
(71) Applicant: DMG Mori Co., Ltd., Yamatokoriyama-shi, Nara 639-1160 (JP)
(72) Inventor: NAGASUE, Hideki, Yamatokoriyama-shi, Nara 639-1160 (JP); NAKAGAWA, Masaaki, Yamatokoriyama-shi, Nara 639-1160 (JP)
(74) Representative: Isarpatent
(86) International application number: PCT/JP2023/016655
(87) International publication number: WO 2023/218987

(57) **Abstract**

A production system (1) includes a plurality of automated work apparatuses (20) that execute a task on at least one production apparatus (100) and a management device (10) that issues a task instruction to the automated work apparatuses (20) and manages the task. The management device (10) monitors the remaining battery power level of each automated work apparatus (20), checks whether the instructed task can be completed under the recognized remaining battery power level, and if an automated work apparatus with an insufficient remaining power level that is determined to be unable to complete the task exists, searches for an automated work apparatus (20) with a sufficient remaining battery power level that is able to complete the task, and if an automated work apparatus (20) with a sufficient remaining power level exists, instructs the task content instructed to an automated work apparatus (20) with an insufficient remaining power level to the automated work apparatus (20) with a sufficient remaining power level to take over the instructed task to the automated work apparatus (20) with a sufficient remaining power level.

## Description

### [Technical Field]

This invention relates to a production system including a plurality of automated work apparatuses that execute a task on at least one production apparatus, the automated work apparatuses including a robot that executes a task on the production apparatus, an automated guided vehicle that has the robot mounted thereon and moves to a work position set to the production apparatus, a control device that controls the automated guided vehicle and the robot, and a battery that supplies electric power, as well as a method for managing a production system, and a program recording medium having a program for a production system management device recorded thereon.

### [Background Art]

Conventionally, production systems called flexible manufacturing system (FMS) have been known. In this production system, for example, a plurality of machine tools are appropriately installed in a factory, and automated guided vehicles are used to transport workpieces and tools before machining to each machine tool. In addition, these automated guided vehicles are used to collect workpieces machined at each machine tool and used tools. Such a production system then allows for unmanned, automated production.

As the automated guided vehicles mentioned above, an automated guided vehicle disclosed in JP 2019-8359 A has been conventionally known. This automated guided vehicle is provided with a distance measurement device that rotates and drives a light projection unit that emits projection light and outputs distance measurement data based on the reception of reflected light reflected on the object to be measured, a map creation unit that creates map information based on the distance measurement data, and an obstacle sensor that detects obstacles, wherein the obstacle sensor is located in the measurement invalid area in a circular area that includes the measurement valid area of the distance measurement device.

According to this automated guided vehicle, first, for example, when the automated guided vehicle is operated by manual operation to travel inside a factory building, planar map information defining the inside contour of the factory building and the external outline of the machine tools and other apparatuses placed inside the building is created by the map creation unit based on the distance measurement data measured by the distance measurement device.

An automated guided vehicle identifies its own current position (self-position) in the building based on the distance measurement data measured by the distance measurement device and the map information created in advance by the map creation unit. The automated guided vehicle then travels trackless and autonomously along a predetermined route based on the map information and self-position information in the building and transports the workpieces, tools, and the like as described above.

In recent years, a production system with a robot mounted on the automated guided vehicle mentioned above has been proposed, as disclosed in JP 2017-132002 A. In this production system, an automated guided vehicle provided with a robot moves to a work position set for a machine tool, and at that work position, the robot executes a task such as attaching or detaching a workpiece to or from the machine tool.

In such a production system, a single robot, which is moved by an automated guided vehicle, can execute a task such as attaching and detaching workpieces to and from a plurality of machine tools, which allows more freedom in the layout of the machine tools than when the robots are installed to the machine tools in the fixed state. Therefore, the layout of the machine tools can be set up in a way that can achieve higher production efficiency. In addition, compared to conventional production systems with robots installed in a fixed state, a single robot can execute a task on a larger number of machine tools, thus saving equipment costs.

### [Citation List]

### [Patent Literature]

[Patent Literature 1] JP 2019-8359 A
[Patent Literature 2] JP 2017-132002 A

### [Summary of Invention]

### [Technical Problem]

By the way, the automated work apparatus composed of the automated guided vehicle, robot, and control device described above is supplied with electric power from a battery mounted on the automated guided vehicle, and this electric power allows the automated guided vehicle, robot, and control device to operate.

The battery is then charged by receiving power from a power feeder when the automated work apparatus moves to the power feeder that is appropriately disposed. For this reason, when a task is being executed on the scheduled production apparatus and the remaining battery power level reaches the predetermined standard remaining power level, the battery has been conventionally charged from the power feeder while having the automated work apparatus move to the power feeder.

However, the operation of the production equipment can be stopped if a battery, the remaining battery power level of which reaches the predetermined standard remaining power level, is charged while suspending the task being executed on the corresponding production apparatus. In such a case, the production efficiency (operation rate) of the production equipment will problematically be reduced.

The present invention has been completed in view of the above state and has an object to provide a production system provided with an automated work apparatus that executes a task on a production apparatus, which can increase the operation rate of the production apparatus compared to conventional ones, or other means.

### [Solution to Problem]

In order to solve the above problem, the present invention relates to
a production system including: a plurality of automated work apparatuses that execute a task on at least one production apparatus; and a management device that issues a task instruction to the automated work apparatuses and manages the task of the automated work apparatuses,
the automated work apparatuses including a robot that executes a task on the production apparatus; an automated guided vehicle that has the robot mounted thereon and moves to a work position set to the production apparatus; a control device that controls the automated guided vehicle and the robot, and a battery that supplies electric power,
the management device being configured to monitor a remaining battery power level of each automated work apparatus, compare a recognized remaining battery power level with a standard remaining power level required to complete an instructed task to check whether the instructed task can be completed, and if an automated work apparatus with an insufficient remaining battery power level that is below the standard remaining power level and is determined to be unable to complete the instructed task exists, search for the automated work apparatus with a sufficient remaining battery power level that exceeds the standard remaining power level and is able to complete the instructed task, and if an automated work apparatus with a sufficient remaining power level exists, instruct a task content instructed to the automated work apparatus with an insufficient remaining power level to the automated work apparatus with a sufficient remaining power level to take over the instructed task to the automated work apparatus with a sufficient remaining power level.

According to this aspect (the first aspect) of the production system, the automated work apparatus operates under the management of the management device, and the automated work apparatus executes (provides) the predetermined task to the predetermined production apparatus.

Then, the management device monitors the remaining battery power level of each automated work apparatus, compares the recognized remaining battery power level with the standard remaining power level required to complete an instructed task to check whether the instructed task can be completed, and if an automated work apparatus with an insufficient remaining battery power level that is below the standard remaining power level and is determined to be unable to complete the instructed task exists, searches for the automated work apparatus with a sufficient remaining battery power level that exceeds the standard remaining power level and is able to complete the instructed task, and if an automated work apparatus with a sufficient remaining power level that is able to complete the task exists, instructs the task contents instructed to the automated work apparatus with an insufficient remaining power level to the automated work apparatus with a sufficient remaining power level to have the automated work apparatus with a sufficient remaining power level take over the instructed task.

Thus, according to this production system of the first aspect, if an automated work apparatus that is not able to complete the task exists, and another automated work apparatus that is able to complete the instructed task exists, the other automated work apparatus is caused to take over the task. Thus, the production apparatus to be provided with the work can be operated without stopping, thereby increasing the production efficiency (operating rate) of the production apparatus compared to conventional ones.

In the production system of the first aspect, an aspect (a second aspect) in which if the automated work apparatus with a sufficient remaining power level does not exist, the management device is configured to instruct the automated work apparatus with an insufficient remaining power level to move to a charging station to have the automated work apparatus with an insufficient remaining power level move to the charging station may be adopted.

In the production system of the first aspect, an aspect (a third aspect) in which if the automated work apparatus with a sufficient remaining power level exists, the management device is configured to have the automated work apparatus with a sufficient remaining power level take over a task and instruct the automated work apparatus with an insufficient remaining power level to move to a charging station to have the automated work apparatus with an insufficient remaining power level move to the charging station may be adopted.

In the production system of the first aspect, an aspect (a fourth aspect) in which if an automated work apparatus with a sufficient remaining power level exists, the management device is configured to check whether the automated work apparatus with an insufficient remaining power level is able to complete a task instructed to the automated work apparatus with a sufficient remaining power level, and if it is determined that the task can be completed, exchange the task of the automated work apparatus with an insufficient remaining power level with the task of the automated work apparatus with a sufficient remaining power level, have the automated work apparatus with an insufficient remaining power level execute the task of the automated work apparatus with a sufficient remaining power level, and have the automated work apparatus with a sufficient remaining power level execute the task of the automated work apparatus with an insufficient remaining power level may be adopted. According to this fourth aspect, the utilization rate of an automated work apparatus can be increased in addition to the utilization rate of a production apparatus.

Furthermore, the present invention is a production system including a plurality of automated work apparatuses that execute a task on at least one production apparatus,
the automated work apparatuses including a robot that executes a task on the production apparatus, an automated guided vehicle that has the robot mounted thereon and moves to a work position set to the production apparatus, a control device that controls the automated guided vehicle and the robot, and a battery that supplies electric power,
a control device of each automated work apparatus being configured to monitor its own remaining power level, compare the recognized remaining power level with the standard remaining power level required to complete the scheduled task to check whether the scheduled task can be completed, and if it is determined that the scheduled task cannot be completed, search for another automated work apparatus with a remaining battery power level that exceeds the standard remaining power level and is able to complete the task by mutual communication, and if another automated work apparatus with a remaining battery power level that is able to complete the task, have the other automated work apparatus takes over its own task of the automated work apparatus.

According to the production system of this aspect (a fifth aspect), each automated work apparatus executes (provides) a predetermined task in response to a request from, for example, each production apparatus.

Then, a control device of each automated work apparatus monitors its own remaining battery power level, compares the recognized remaining power level with the standard remaining power level required to complete a scheduled task to check whether the scheduled task can be completed, and if the remaining battery power level is below the standard remaining power level and is determined to be unable to complete the scheduled task, searches for another automated work apparatus with a remaining power level that exceeds the standard remaining power level and is able to complete the task by mutual communication, and if another automated work apparatus with a remaining power level that is able to complete the task, for example, sends information relating to its own task to the other automated work apparatus to have the other automated work apparatus take over the task.

Thus, according to this production system of the fifth aspect, if an automated work apparatus that is unable to complete the task exists, and another automated work apparatus that is able to complete the task exists, the other automated work apparatus is caused to take over the task. Thus, the production apparatus to be provided with the work can be operated without stopping, thereby increasing the production efficiency (operating rate) of the production apparatus compared to conventional ones.

In the production system of the fifth aspect, an aspect (a sixth aspect) in which if the other automated work apparatus does not exist, the control device of each automated work apparatus is configured to move to a charging station to charge the battery may be adopted.

In the production system of the fifth aspect, an aspect (a seventh aspect) in which if the other automated work apparatus exists, the control device of each automated work apparatus is configured to take over its own task to the other automated work apparatus and move to a charging station to charge the battery may be adopted.

In the production system of the fifth aspect, an aspect (an eighth aspect) in which if the other automated work apparatus exists, the control device of each automated work apparatus is configured to check whether a task instructed to the other automated work apparatus can be completed by itself, and if it is determined that a task can be completed, exchange its own task with the task of the other automated work apparatus and have the other automated work apparatus execute its own task and the task of the other automated work apparatus by itself may be adopted. According to this eighth aspect, the utilization rate of an automated work apparatus can be increased in addition to the utilization rate of a production apparatus.

Furthermore, the present invention relates to a method for managing the task of an automated work apparatus by issuing a task instruction to the automated work apparatus in a production system that includes a plurality of automated work apparatuses executing a task on at least one production apparatus, the automated work apparatuses including a robot that executes a task on the production apparatus, an automated guided vehicle that has the robot mounted thereon and moves to a work position set to the production apparatus, a control device that controls the automated guided vehicle and robot, and a battery that supplies electric power, the method including:
monitoring the remaining battery power level of each automated work apparatus;
comparing the recognized remaining battery power level with the standard remaining power level required to complete an instructed task to check whether the instructed task can be completed;
if an automated work apparatus with an insufficient remaining power level that is below the standard remaining power level and is determined to be unable to complete the instructed task, searching for an automated work apparatus with a sufficient remaining battery power level that exceeds the standard remaining power level and is able to complete the instructed task; and
if an automated work apparatus with a sufficient remaining power level exists, instructing a task content instructed to an automated work apparatus with an insufficient remaining power level to an automated work apparatus with a sufficient remaining power level to have the automated work apparatus with an insufficient remaining power level take over the instructed task.

In addition, the present invention relates to a program recording medium having a management device program used for a production system management device recorded thereon, the production system including: a plurality of automated work apparatuses that execute a task on at least one production apparatus; and a management device that issues a task instruction to the automated work apparatuses and manages a task of the automated work apparatuses, the automated work apparatuses including a robot that executes a task on the production apparatus, an automated guided vehicle that has the robot mounted thereon and moves to a work position set to the production apparatus, a control device that controls the automated guided vehicle and the robot, and a battery that supplies electric power,
the management device program being configured to execute:
a process of monitoring the remaining battery power level of each automated work apparatus;
a process of comparing the recognized remaining battery power level with the standard remaining power level required to complete the instructed task to check whether the instructed task can be completed;
if an automated work apparatus with an insufficient remaining battery power level that is below the standard remaining power level and is determined to be unable to complete the instructed task, a process of searching for an automated work apparatus with a sufficient remaining battery power level that exceeds the standard remaining power level and is able to complete the instructed task; and
if an automated work apparatus with a sufficient remaining power level exists, a process of instructing an automated work apparatus with a sufficient remaining power level to take over the task content instructed to an automated work apparatus with an insufficient remaining power level to have the automated work apparatus with a sufficient remaining battery take over the instructed task.

### [Effects of the Invention]

As stated above, according to the production system of the present invention, if an automated work apparatus (a first automated work apparatus) that is not able to complete the task exists, and another automated work apparatus (a second automated work apparatus) that is able to complete the task exists, the other automated work apparatus is caused to take over the task. Thus, the production apparatus to be provided with the work can be operated without stopping, thereby increasing the production efficiency (operating rate) of the production apparatus compared to conventional ones.

### [Brief Description of Drawing]

[Fig. 1]

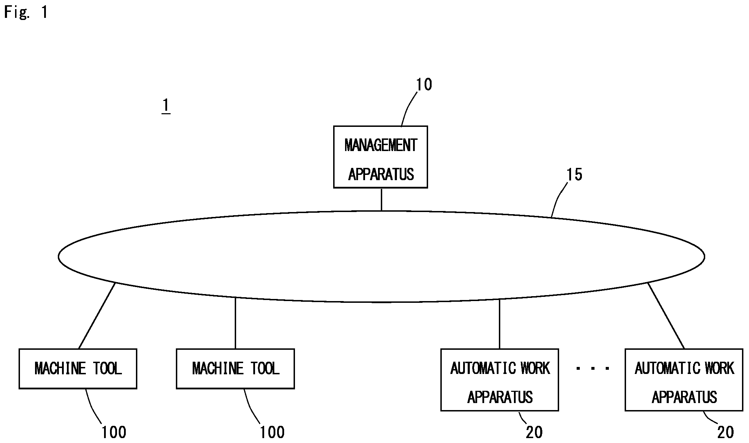

   Fig. 1 is a schematic diagram illustrating the schematic framework of a production system according to one embodiment of the present invention.
[Fig. 2]

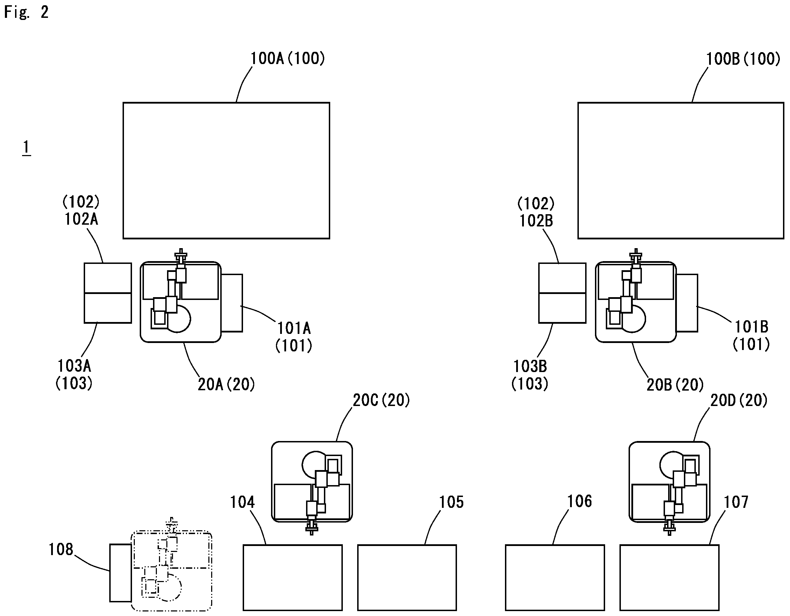

   Fig. 2 is a plan view illustrating the device configuration of the production system according to the present embodiment.
[Fig. 3]

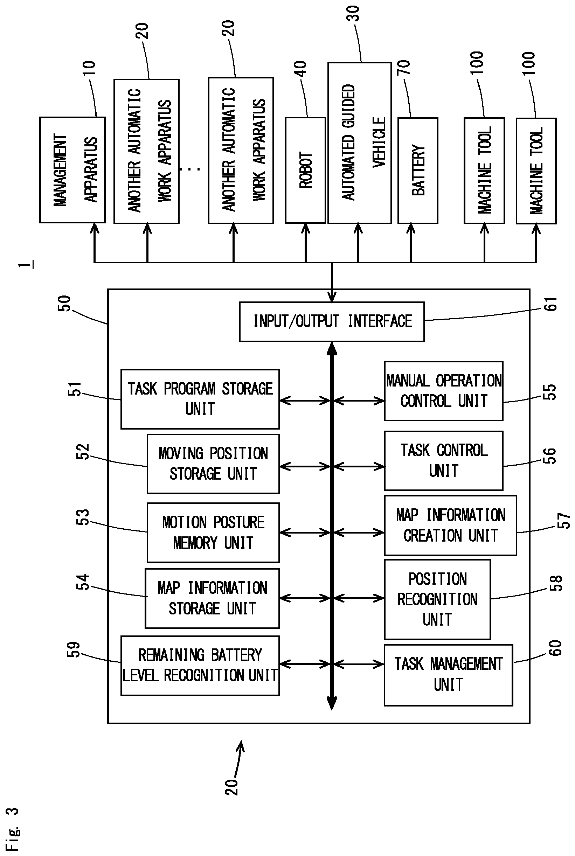

   Fig. 3 is a block diagram illustrating an outline of the control device that constitutes the automated work apparatus according to the present embodiment.
[Fig. 4]

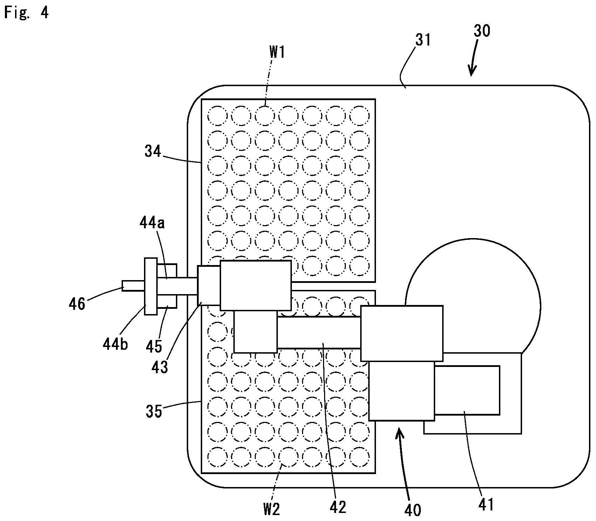

   Fig. 4 is a plan view illustrating the automated work apparatus according to the present embodiment.
[Fig. 5]

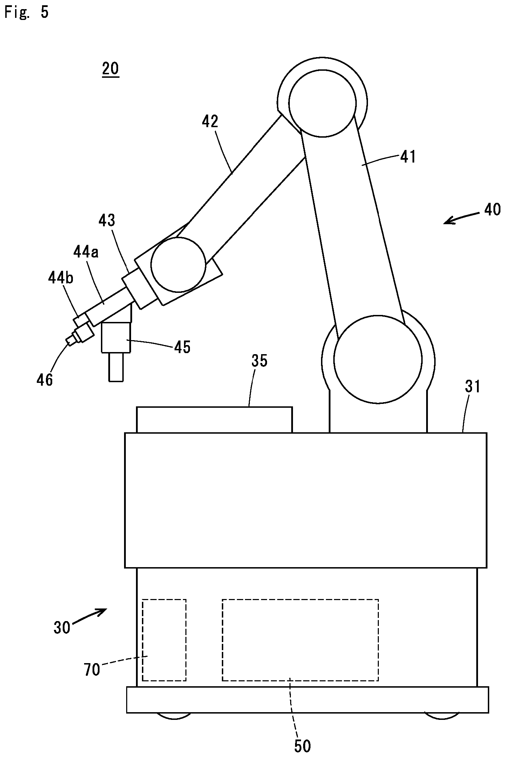

   Fig. 5 is a right-side view of the automated work apparatus illustrated in Fig. 4.
[Fig. 6]

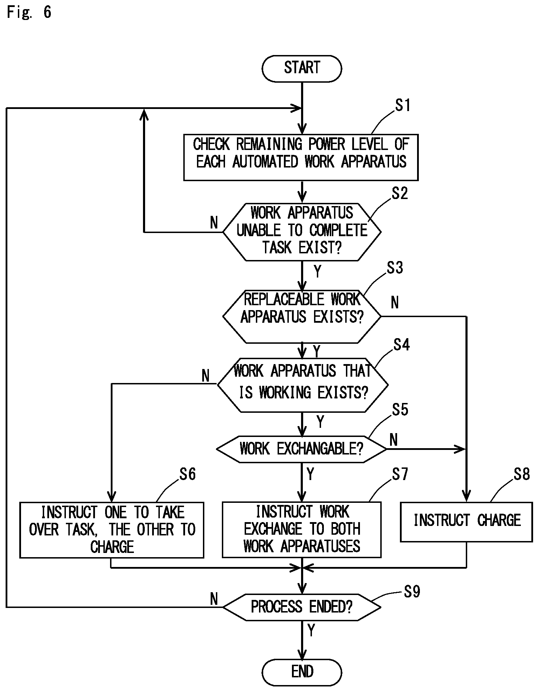

   Fig. 6 is a flowchart illustrating the process in the management device according to the present embodiment.
[Fig. 7]

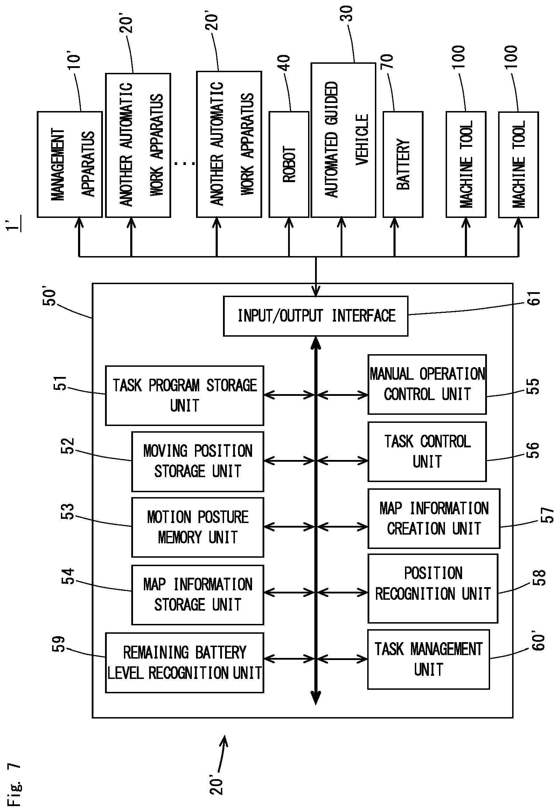

   Fig. 7 is a block diagram illustrating an outline of the control device that constitutes the automated work apparatus according to another embodiment of the present invention.
[Fig. 8]

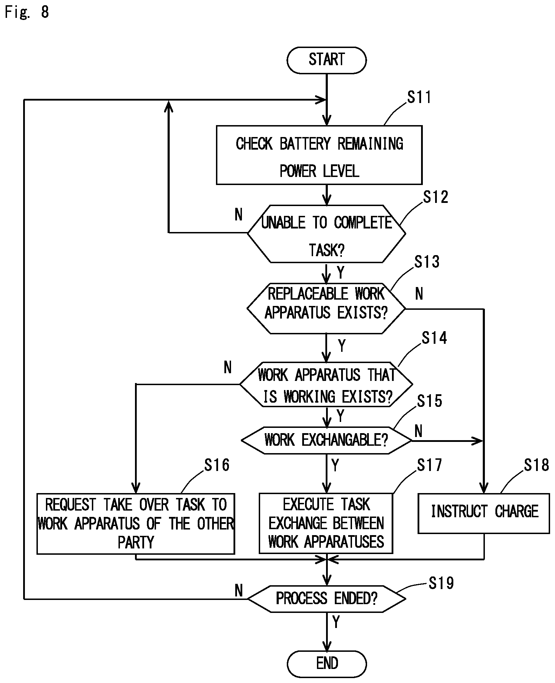

   Fig. 8 is a flowchart illustrating the process in the task management unit of the control device according to another present embodiment.

### [Description of Embodiments]

Hereinafter, the production system according to a specific embodiment of the present invention will be described with reference to the drawings.

As shown in Figs. 1 and 2, the production system 1 of this example is composed of two machine tools 100 (100A and 100B) as production apparatuses; a material stocker 104 that stores a material W1 before machining; a product stocker 105 that stores a product W2 after machining; a washing device 106 that washes the product W2; a product stocker 107 that stores the product W2 after washing; four automated work apparatuses 20 (20A, 20B, 20C, and 20D) that execute a task on each machine tool 100, the material stocker 104, the product stocker 105, the washing device 106, the product stocker 107, and the like; a management device 10 that manages the task of each machine tool 100 and an automated work apparatus 20 by issuing task instructions to each machine tool 100 and the automated work apparatus 20; and the like. The management device 10, each automated work apparatus 20, and each machine tool 100 are interconnected via a network 15 such as the Internet. Needless to say, the device configuration illustrated in Fig. 1 is exemplary and is not limited thereto.

The machine tool 100 is applicable to all conventionally known machine tools with communication functions to connect to network 15, such as NC lathes and machining centers. As shown in Fig. 2, in this example, two machine tools 100A and 100B are installed side by side at an appropriate distance, but naturally, the number of machine tools 100 to be installed and the arrangement thereof are not limited thereto.

In the vicinity of each machine tool 100 (100A or 100B), power feeders 101 (101A and 101B), material stockers 102 (102 and 102B) to store the material W1, and product stockers 103 (103A and 103B) to store the product W2 are disposed respectively. The material stocker 104 and the product stocker 105 are stockers with a larger capacity than the material stockers 102 and product stockers 103, and are located a short distance away from the machine tools 100. A power feeder 108 is also provided in the vicinity of the material stocker 104.

As shown in Figs. 4 and 5, the automated work apparatus 20 is composed of an automated guided vehicle 30, a robot 40 mounted on the automated guided vehicle 30, a control device 50 that controls the automated guided vehicle 30 and the robot 40, and a battery 70 that supplies power to the automated guided vehicle 30, the robot 40, and the control device 50.

The automated guided vehicle 30 has the robot 40 mounted on the top surface thereof (the loading surface 31), and a first pallet 34 and a second pallet 35 are further placed side by side on the loading surface 31. The first and second pallets 34 and 35 contain the material W1 and the product W2, depending on the task content of the automated work apparatus 20.

The automated guided vehicles 30 is provided with a sensor capable of recognizing its own position in the factory (for example, a distance-measuring sensor using a laser beam) and is configured to travel trackless in the factory, including the area where the machine tool 100 is located, under the control of the control device 50. In this example, the automated guided vehicle 30 moves to work positions respectively set for each machine tool 100, the material stocker 104, the product stockers 105 and 107, and the washing device 106, and to the power receiving position set for the power feeder 108. In this example, the control device 50 and the battery 70 are located in this automated guided vehicle 30.

The robot 40 is an articulated robot with three arms (a first arm 41, a second arm 42, and a third arm 43), which are manipulator units, connected by joints so that these first arm 41, second arm 42, and third arm 43 are jointed together, and a support shaft 44a is attached to the distal end of the third arm 43, and a hand device 45 as an end-effector is attached to this support shaft 44a. Furthermore, a support bar 44b is attached to the support shaft 44a, and a camera device 46, also as an end effector, is attached to this support bar 44b. The robot 40 then moves these hand device 45 and camera device 46 in three-dimensional space under the control of the control device 50. The structure of the robot 40 is not limited to such an articulated type but may adopt any known available structure.

As shown in Fig. 3, the control device 50 is composed of a task program storage unit 51, a moving position storage unit 52, a motion posture storage unit 53, a map information storage unit 54, a manual operation control unit 55, a task control unit 56, a map information creation unit 57, a position recognition unit 58, a remaining battery power level recognition unit 59, a task management unit 60, and an input/output interface 61, and the like. The control device 50 is connected via this input/output interface 61 to the automated guided vehicle 30, the robot 40, and the battery 70 that constitute its own automated work apparatus 20, as well as via the network 15 described above to the management device 10, each machine tool 100, and other automated work apparatuses 20.

The control device 50 is composed of a computer including a CPU, a RAM, and a ROM, and the manual operation control unit 55, task control unit 56, map information creation unit 57, position recognition unit 58, remaining battery power level recognition unit 59, task management unit 60, and input/output interface 61 are implemented by computer programs stored in a suitable recording medium of the control device 50 and execute the processes described below. The task program storage unit 51, the moving position storage unit 52, the motion posture storage unit 53, and the map information storage unit 54 are composed of a RAM or other suitable recording media.

The manual operation control unit 55 is a functional unit that operates the automated guided vehicle 30 and the robot 40 according to operation signals inputted by an operator from a not-illustrated operation panel. That is, the operator can manually operate the automated guided vehicle 30 and the robot 40 (including the hand device 45 and the camera device 46) using an operation panel (not illustrated) under the control of this manual operation control unit 55.

The task program storage unit 51 is a functional unit that stores programs for automated operation to automatedly operate the automated guided vehicles 30 and the robot 40 during automated operation, as well as programs for map creation to operate the automated guided vehicle 30 when creating map information in the factory, as described below. The program for automated operation and the program for map creation are, for example, inputted from the management device 10 connected via the network 15, or from the input/output unit disposed on the operation panel (not illustrated), and stored in the task program storage unit 51.

The program for automated operation includes command codes for the moving position as the target position to which the automated guided vehicle 30 moves, moving speed, and orientation of the automated guided vehicle 30, command codes for the operation in which the robot 40 operates sequentially, and command codes for the operation of the hand device 45 and the operation of the camera device 46. The program for map creation includes a command code to have the automated guided vehicles 30 travel trackless everywhere in the factory so that the map information can be created by the map information creation unit 57.

The map information storage unit 54 is a functional unit that stores map information including the layout information of machines, apparatuses, devices, and the like (devices and the like) located in the factory where the automated guided vehicle 30 travels, and this map information is created by the map information creation unit 57.

The map information creation unit 57 acquires spatial information in the factory from the distance data detected by the sensors when the automated guided vehicles 30 is driven according to the map creation program stored in the task program storage unit 51 under the control of the task control unit 56 of the control device 50, and recognizes the planar shape of devices or the like to be installed in the factory, for example, recognizes the position, planar shape, and the like (arrangement information) of a specific device installed in the factory (in this example, each machine tool 100) based on the planar shape of the devices or the like registered in advance. Then, the map information creation unit 57 stores the obtained spatial information and arrangement information of devices and the like in the map information storage unit 54 as map information in the factory.

The position recognition unit 58 is a functional unit that recognizes the position and posture of the automated guided vehicles 30 in the factory based on the distance data detected by the sensors and the map information in the factory, which is stored in the map information storage unit 54, and the operation of the automated guided vehicles 30 is controlled by the task control unit 56 based on the position and posture of the automated guided vehicles 30 recognized by this position recognition unit 58.

The moving position storage unit 52 is a functional unit that stores a specific movement position as a specific target position to which the automated guided vehicle 30 moves, corresponding to the command code in the program, where the movement position includes each work position set for each machine tool 100 described above. This moving position is set, for example, by manually operating the automated guided vehicles 30 using the operation panel (not illustrated) under the control of the manual operation control unit 75 to move the automated guided vehicles 30 to each target position, and then storing the position data recognized by the position recognition unit 58 in the moving position storage unit 52. This operation is called a teaching operation.

The motion posture storage unit 53 is a functional unit that stores data pertaining to the postures (motion postures) of the robot 40 that change sequentially as the robot 40 moves in a predetermined sequence and that corresponds to the command codes in the program. This data pertaining to the motion posture is the rotation angle data of each joint (motor) of the robot 40 in each posture when the robot 40 is manually operated to take each target posture by teaching operation using the operation panel (not illustrated) under the control by the manual operation control unit 55. This rotation angle data is stored in the motion posture storage unit 53 as data pertaining to the motion posture.

The specific motion posture of the robot 40 is set at each machine tool 100, the material stocker 102, the product stocker 103, the material stocker 104, the product stockers 105 and 107, and the washing device 106, respectively. For example, in the work on the machine tool 100, the posture pertaining to the attaching and detaching operations of the material W1 and the product W2 to and from the machine tool 100, specifically, the posture pertaining to each operation of removing the machined product W2 from the machine tool 100 and storing the product W2 in the product stocker 103, then taking out the material W1 in the material stocker 102 and attaching the material W1 onto the machine tool 100 is set.

In the task of taking out material W1 from the material stocker 104, the posture pertaining to each operation of taking out the material W1 from the material stocker 104 and storing the material W1 in a first pallet 34 is set. In the task of storing the product W2 in product stocker 105, the posture pertaining to each operation of taking out the product W2 stored in a second pallet 35 and storing the product W2 in the product stocker 105 is set.

In the task of supplying the material W1 to each material stocker 102, the posture pertaining to each operation of taking out the material W1 stored in the first pallet 34 and storing the material W1 in the material stocker 102 is set. In the task of taking out the product W2 from each product stocker 103, the posture pertaining to each operation of taking out the product W2 stored in the product stocker 103 and storing the product W2 in the second pallet 35 is set.

In the task of taking out the product W2 from the product stocker 105 and storing the product W2 in the washing device 106, the posture pertaining to each operation of taking out the product W2 from the product stocker 105 and storing the product W2 in the first pallet 34 and each operation of taking out the product W2 stored in the first pallet 34 and storing the product W2 in the washing device 106 is set.

In the task of taking out the product W2 after washing from the washing device 106 and storing the product W2 in the product stocker 107, the posture pertaining to each operation of taking out the product W2 from the washing device 106 and storing the product W2 on the second pallet 35, and each operation of taking out the product W2 stored on the second pallet 35 and storing the product W2 in the product stocker 107 is set.

The task control unit 56 is a functional unit that uses any of the automated operation program and map creation program stored in the task program storage unit 51 and operates the automated guided vehicles 30 and robot 40 according to the programs. In doing so, the data stored in the moving position storage unit 52 and motion posture storage unit 53 described above are used as necessary.

The task management unit 60 is a functional unit that receives task instructions from the management device 10 and has the task control unit 56 execute the received task, and the task control unit 56 reads out the program corresponding to the task from the task program storage unit 51 and executes the program in accordance with the task instructions from the task management unit 60.

The remaining battery power level recognition unit 59 is a functional unit that recognizes the remaining power level of the battery 70 from the battery 70 via the input/output interface 61, and executes the process of sending information pertaining to the recognized remaining battery power level to the management device 10 via the input/output interface 61 at predetermined time intervals.

The management device 10 is composed of a computer including a CPU, a RAM, a ROM, and the like, and is connected to each of the machine tools 100 and the automated work apparatus 20 via network 15, and has the function of managing the operational status thereof according to a predetermined machining schedule. For example, a task instruction process is executed to instruct each machine tool 100 and the automated work apparatus 20 to work, respectively, according to a predetermined machining schedule. Specifically, in accordance with the machining schedule, the predetermined machine tool 100 is commanded to machine the predetermined workpiece W, and the predetermined automated work apparatus 20 is commanded to execute the attaching and detaching task that executes the detachment of the machined product W2 and the attachment of new material W1 from and to the corresponding machine tool 100, and the machining on each machine tool 100 is managed.

The management functions in the management device 10 (functions including the processes illustrated in Fig. 6, which will be described below) are implemented by the management device 10 executing the computer program (management device program) stored in a suitable recording medium of the management device 10. Also, in another mode, the management device program can be recorded on a conventionally known external program recording medium, such as a portable USB memory or a CD-ROM, and the management device 10 can execute the management device program stored in this program recording medium, or after reading the management device program from the program recording medium, the management device program can be executed. The management device program can also be stored (downloaded) in the management device 10 via a suitable network, such as the network 15 described above.

The attaching and detaching task corresponds to the task of taking out the machined product W2 in the machine tool 100 and storing the product W2 in the product stocker 103, and then taking out the material W1 in the material stocker 102 and supplying the material W1 to the machine tool 100. In this example, when this attaching and detaching task is executed, the automated work apparatus 20 is always positioned in the working position of the corresponding machine tool 100 to execute the attaching and detaching task, and during this attaching and detaching task, the battery 70 is charged by the power supply from the power feeder 101.

In addition, the management device 10 commands the predetermined automated work apparatus 20 to execute a material supply task to take out the material W1 stored in the material stocker 104 from the material stocker 104 and supply the material W1 to the material stocker 102 of each machine tool 100 and a product collection task to take out the product W2 stored in the product stocker 103 of each machine tool 100 and collect the product W2 in the product stocker 105. In this material supply task and product collection task, the automated work apparatus 20 moves between the material stocker 102 and product stocker 103 attached to each machine tool 100 and the material stocker 104 and product stocker 105.

In addition, the management device 10 commands the predetermined automated work apparatus 20 to take out the products stored in the product stocker 105 and supply the products to the washing device 106 according to the machining schedule, and to wash the products W2 washed by the washing device 106 and store the products W2 in the product stocker 107. When executing this washing task, the automated work apparatus 20 executes the task while moving between the product stocker 105, the washing device 106, and the product stocker 107.

In the example illustrated in Fig. 2, the automated work apparatus 20A executes the task of supplying the material W1 to the machine tool 100A and the task of taking out the product W2 after machining, and the automated work apparatus 20B executes the task of supplying material W1 to the machine tool 100B and the task of taking out the product W2 after machining. The automated work apparatus 20C executes the task of supplying the material W1 and the task of collecting the product W2 between the material stocker 102A or 102B and the product stocker 103A or 103B attached to each machine tool 100A or 100B and the material stockers 104 and the product stockers 105. The automated work apparatus 20C also executes the washing work between the product stocker 105, the washing device 106, and the product stocker 107. The automated work apparatus 20A and 20B are supplied with power from the power feeders 101A and 101B to the respective batteries 70 during their respective tasks, and the batteries 70 are maintained in a fully charged state.

The management device 10 recognizes the remaining power level of the battery 70 of each automated work apparatus 20 and executes a task coordination process to coordinate the task of each automated work apparatus 20 according to the remaining power level. Specifically, the management device 10 executes the process illustrated in Fig. 6. That is, the management device 10 monitors the remaining power level sent from the remaining battery power level recognition unit 59 of each automated work apparatus 20 (step S1) and determines whether the task commanded to each automated work apparatus 20 can be completed with the remaining battery power level (step S2). For example, the management device 10 holds the remaining battery power level required for the instructed task in a table format in advance as a standard remaining power level, and determines that the task will not be completed when the remaining battery power level of the automated work apparatus 20 falls below the standard remaining power level set for the instructed task.

When an automated work apparatus 20 with a remaining battery power level that is below the standard remaining power level occurs, the management device 10 searches for the existence of an automated work apparatus 20 with a remaining power level that exceeds this standard remaining power level (step S3), and if no applicable automated work apparatus 20 exists, the management device 10 instructs the automated work apparatus 20 to move to the power feeder 108 to charge the battery 70 with an insufficient remaining power level (step S8).

If an applicable automated work apparatus 20 exists in step S3, the management device 10 determines whether or not the automated work apparatus 20 is working (step S4), and if it is determined that the automated work apparatus 20 is working, the management device 10 determines whether or not the automated work apparatus 20 with an insufficient remaining power level is able to complete the task of the automated work apparatus 20 to be exchanged (step S5). If the management device 10 determines that the task can be completed, the management device 10 instructs to exchange the previously instructed task between the automated work apparatus 20 with a sufficient remaining power level and the automated work apparatus 20 with an insufficient remaining power level (step S7). If the management device 10 determines that the task cannot be completed, the management device 10 instructs the automated work apparatus 20 with an insufficient remaining power level to move to the power feeder 108 to charge the battery 70 with an insufficient remaining power level (step S8).

For example, in the example illustrated in Fig. 2, if the automated work apparatus 20C that is executing the task of supplying material W1 and the task of collecting product W2 becomes insufficient in the remaining power level, and automated work apparatuses 20A, 20B, and 20D are identified as automated work apparatuses 20 with a sufficient remaining power level, the management device 10 determines whether or not these automated work apparatuses 20A, 20 20B, and 20D are working, and if these automated work apparatuses are working, the management device 10 determines whether or not the automated work apparatus 20C is able to take over these tasks.

If it is determined that the automated work apparatus 20C is able to take over the task of any of automated work apparatus 20A, 20B, or 20D, the management device 10 instructs to exchange the previously instructed task between any of the automated work apparatus 20A, 20B, or 20D and the automated work apparatus 20C. For example, if automated work apparatus 20C is able to take over the task of automated work apparatus 20D, the management device 10 can exchange tasks between automated work apparatus 20C and automated work apparatus 20D.

On the contrary, if it is determined that the automated work apparatus 20C is unable to take over the task of any of automated work apparatus 20A, 20B, or 20D, the management device 10 instructs the automated work apparatus 20C to move to the power feeder 108 to charge the battery 70 with an insufficient remaining power level.

If the management device 10 determines in step S4 that the applicable automated work apparatus 20 is not working and is on standby, the automated work apparatus 20 with a sufficient remaining power level is made to take over the task of the automated work apparatus 20 with an insufficient remaining power level, and the management device 10 instructs to the automated work apparatus 20 with an insufficient remaining power level to move to the power feeder 108 to charge the battery 70 with an insufficient remaining power level (step S6).

Thereafter, the management device 10 repeats the above steps S1 to S8 until it is ready to terminate the process (step S9) .

According to the production system 1 with the above configuration in this example, machining in each machine tool 100 is managed under the management of the management device 10, and necessary machining is executed in each machine tool 100 according to the schedule provided in the management device 10. In addition, the task of supplying the material W1 before machining to each machine tool 100 and the task of taking out the product W2 after machining, as well as the task of supplying the material W1 and the task of collecting the product W2 executed between the material stocker 102 and the product stocker 103 attached to each machine tool 100 and the material stocker 104 and the product stocker 105, and the task of washing executed between the product stocker 105, the washing device 106, and the product stocker 107 are executed by the automated work apparatus 20 selected by the management device 10.

The management device 10 then executes the task coordination process illustrated in Fig. 6 while each automated work apparatus 20 is in operation. That is, the management device 10 monitors the remaining power level of the battery 70 of each automated work apparatus 20, determines whether the task commanded to each automated work apparatus 20 can be completed with the recognized remaining battery power level, and if an automated work apparatus 20 with an insufficient remaining power level that is unable to complete the task exists, the automated work apparatus 20 with an insufficient remaining power level and the other automated work apparatus 20 with a sufficient remaining power level are exchanged between each other, if possible.

On the contrary, if no other automated work apparatus 20 that is able to exchange the task exists and another automated work apparatus 20 on standby that is able to take over the task exists, the management device 10 has the automated work apparatus 20 on standby take over the task and have the battery 70 of the automated work apparatus 20 with an insufficient remaining power level charged. Also, if no other automated work apparatus 20 that is able to take over the task exists, the management device 10 has the battery 70 of the automated work apparatus 20 with an insufficient remaining power level charged.

As stated above, according to the production system 1 of the present example, if an automated work apparatus 20 that is unable to complete the task exists and another automated work apparatus 20 that is able to complete the task exists, the task is taken over by the other automated work apparatus. Thus, the production apparatus to be provided with the work can be operated without stopping, thereby increasing the production efficiency (operating rate) of the production apparatus compared to conventional ones.

For example, in the above example, when the battery level of the automated work apparatus 20C that is executing the task of supplying the material W1 and the task of collecting the product W2 becomes insufficient and the task is then exchanged between the automated work apparatus 20C and the automated work apparatus 20D that is executing the cleaning task, the automated work apparatus 20C leaves for charging, which prevents the delay in supplying the material W1 to the material stockers 102A and 102B and the delay in collecting the product W2 from the product stockers 103A and 103B, and accordingly prevents the operation rate of the machine tools A and B from being reduced.

If respective tasks of the automated work apparatus 20 with an insufficient remaining battery power level and the automated work apparatus 20 with a sufficient remaining power level are exchanged between each other, the time that the automated work apparatus 20 leaves for charging can be kept as short as possible, and the utilization rate of the automated work apparatus 20 can be increased.

Although one embodiment of the present invention has been described above, the mode in which the present invention can be adopted is not limited in any way to the above examples.

For example, in the above example, the system is configured to have the management device 10 coordinate the task according to the remaining power level of the automated work apparatus 20, but is not limited to such a configuration. For example, such adjustment of works may be carried out autonomously in each automated work apparatus 20.

The production system 1' with such an automated control device 20' is illustrated in Fig. 7. This production system 1' differs from the production system 1 in the above example only in the process of the management device 1 and the control device 50 of the automated work apparatus 20, and is identical in other configurations.

Specifically, the configuration of the management device 1' in this example differs from that of the management device 1 in the above example only in that the management device 1' does not execute the task coordination process illustrated in Fig. 6 described above. The configuration of the control device 50' differs from that of the control device 50 in the above example only in that the task management unit 60' thereof is configured to additionally execute the task coordination process illustrated in Fig. 8, compared to the task management unit 60 in the above example. Thus, in this example, task coordination according to the remaining battery power level is executed autonomously in each automated work apparatus 20'.

Specifically, the task management unit 60' in this example receives task instructions from the management device 10 and, in addition to the process of having the task control unit 56 execute the received task, executes the autonomous work coordination process illustrated in Fig. 8 with the other automated work apparatus 20'.

That is, the task management unit 60' of each automated work apparatus 20' monitors the remaining power level of the battery 70 recognized by the remaining battery power level recognition unit 59 (step S11) and determines whether the remaining battery power level is sufficient to complete the task commanded by the management device 10' (step S12). For example, the work management device 60' holds the remaining battery power level required for the instructed task in a table format in advance as a standard remaining power level, and determines that the task will not be completed when the remaining battery power level recognized by the remaining battery power level recognition unit 59 falls below the standard remaining power level set for the instructed task.

When the remaining battery power level falls below the standard remaining power level, the work management device 60' communicates with the work management device 60' of another automated work apparatus 20' mutually to search for the existence of an automated work apparatus 20' with a remaining battery power level that exceeds this standard remaining battery level, and if no applicable automated work apparatus 20' exists (step S13), the work management device 60' sends a charging operation instruction to the task control unit 56 to execute the process of moving the automated work apparatus 20' to the power feeder 108 to charge the battery 70 (step S18).

On the other hand, if the existence of the applicable automated work apparatus 20' is confirmed in step S13, the task management unit 60' further determines, through intercommunication with the automated work apparatus 20', whether or not the target automated work apparatus 20' is working (step S14). If the task management unit 60' determines that the target automated work apparatus 20' is working, the task management unit 60' further determines whether or not the target automated work apparatus 20' is able to complete the task of the applicable automated work apparatus 20' by itself (step S15). If the task management unit 60' determines that the task can be completed, the task management unit 60' instructs its own task control unit 56 to execute the process of mutually rotating respective tasks with the target automated work apparatus 20', for example, mutually sending information (task codes, etc.) related to the content of respective tasks, and then execute the task of the other party received (step S17). On the other hand, if it is determined that the task cannot be completed, the task management unit 60' sends a charging operation instruction to its own task control unit 56 to execute a process to move the automated work apparatus 20' to the power feeder 108 and charge the battery 70 (step S18).

If the work management device 60' determines in step S14 that the applicable automated work apparatus 20' is not working and is on standby, the work management device 60' has the target automated work apparatus 20' to take over its own task and sends a charging operation instruction to its own task control unit 56 to execute the process of moving the automated work apparatus 20' to the power feeder 108 to charge the battery 70 (step S16).

Thereafter, the task management unit 60' repeats the above steps S11 to S18 until it is ready to terminate the process (step S19).

As stated above, also according to the production system 1' of this example, as with the production system 1 of the example above, if an automated work apparatus 20' that is unable to complete the task exists and another automated work apparatus 20' that is able to complete the task exists, the task can be taken over by the other automated work apparatus 20'. Thus, the production apparatus to be provided with the work can be operated without stopping, thereby increasing the production efficiency (operating rate) of the production apparatus compared to conventional ones.

If respective tasks of the automated work apparatus 20' with an insufficient remaining battery power level and the automated work apparatus 20' with a sufficient remaining power level are exchanged between each other, the time that the automated work apparatus 20' leaves for charging can be kept as short as possible, and the operation rate of the automated work apparatus 20' can be increased.

The work management computer program (computer program functioning as the task management unit 60') for executing the process illustrated in Fig. 8 above can also be recorded on a portable external program recording medium, and the control device 50' of each automated work apparatus 20' can execute the work management computer program recorded on this program recording medium, or after reading the work management computer program from the program recording medium into the control device 50', the work management computer program can be executed. The work management computer program can be stored (downloaded) in the control device 50' via a network as appropriate.

Although it is stated again, the explanations of the above embodiments are in all respects illustrative and not restrictive. Variations and modifications are possible for a person skilled in the art as appropriate. The scope of the present invention is indicated by the claims, not by the embodiments described above. Furthermore, the scope of the present invention includes modifications from embodiments within the claims and the scope of equivalents.

### [Reference Signs List]

1 Production System
10 Management device
20 (20A, 20B, 20C, 20D) Automated work apparatus
30 Automated guided vehicle
34 First pallet
35 Second pallet
40 Robot
50 Control device
70 Battery
100(100A, 100B) Machine tool
101(101A, 101B) Charging device
102 (102A, 102B) Material stocker
103 (103A, 103B) Product stocker
104 Material stocker
105 Product stocker
106 Washing device
107 Product stocker
108 Charging device

## Claims

1. A production system comprising: a plurality of automated work apparatuses that execute a task on at least one production apparatus; and a management device that issues a task instruction to the automated work apparatuses and manages a task of the automated work apparatuses,
the automated work apparatuses including a robot that executes a task on the production apparatus; an automated guided vehicle that has the robot mounted thereon and moves to a work position set to the production apparatus; a control device that controls the automated guided vehicle and the robot, and a battery that supplies electric power,
the management device being configured to monitor a remaining battery power level of each automated work apparatus, compare a recognized remaining battery power level with a standard remaining power level required to complete an instructed task to check whether the instructed task can be completed, and if an automated work apparatus with an insufficient remaining battery power level that is below the standard remaining power level and is determined to be unable to complete the instructed task exists, search for the automated work apparatus with a sufficient remaining battery power level that exceeds the standard remaining power level and is able to complete the instructed task, and if an automated work apparatus with a sufficient remaining power level exists, instruct a task content instructed to the automated work apparatus with an insufficient remaining power level to the automated work apparatus with a sufficient remaining power level to have the automated work apparatus with a sufficient remaining power level take over the instructed task.

2. The production system according to claim 1, wherein if the automated work apparatus with a sufficient remaining power level does not exist, the management device is configured to instruct the automated work apparatus with an insufficient remaining power level to move to a charging station to have the automated work apparatus with an insufficient remaining power level move to the charging station.

3. The production system according to claim 1, wherein if the automated work apparatus with a sufficient remaining power level exists, the management device is configured to have the automated work apparatus with a sufficient remaining power level take over a task and instruct the automated work apparatus with an insufficient remaining power level to move to a charging station to have the automated work apparatus with an insufficient remaining power level move to the charging station.

4. The production system according to claim 1, wherein, if an automated work apparatus with a sufficient remaining power level exists, the management device is configured to check whether the automated work apparatus with an insufficient remaining power level is able to complete a task instructed to the automated work apparatus with a sufficient remaining power level, and if it is determined that automated work apparatus with an insufficient remaining power level is able to complete the task, exchange a task of the automated work apparatus with an insufficient remaining power level with the task of the automated work apparatus with a sufficient remaining power level, have the automated work apparatus with an insufficient remaining power level execute the task of the automated work apparatus with a sufficient remaining power level, and have the automated work apparatus with a sufficient remaining power level execute the task of the automated work apparatus with an insufficient remaining power level.

5. A production system comprising: a plurality of automated work apparatuses that execute a task on at least one production apparatus,
the automated work apparatuses including a robot that executes a task on the production apparatus; an automated guided vehicle that has the robot mounted thereon and moves to a work position set to the production apparatus; a control device that controls the automated guided vehicle and the robot, and a battery that supplies electric power,
a control device of each of the automated work apparatuses being configured to monitor its own remaining battery power level, compare a recognized remaining battery power level with a standard remaining power level required to complete a scheduled task to check whether the scheduled task can be completed, and if the remaining battery power level is below the standard remaining power level and is determined to be unable to complete the scheduled task, search for another automated work apparatus with a remaining battery power level that exceeds the standard remaining power level and is able to complete the task by mutual communication, and if another automated work apparatus with a remaining battery power level that is able to complete the task, have the other automated work apparatus take over its own task.

6. The production system of claim 5, wherein if the other automated work apparatus does not exist, the control device of each automated work apparatus is configured to move to a charging station to charge the battery.

7. The production system of claim 5, wherein if the other automated work apparatus exists, the control device of each automated work apparatus is configured to take over its own task to the other automated work apparatus and move to a charging station to charge the battery.

8. The production system of claim 5, wherein if the other automated work apparatus exists, the control device of each automated work apparatus is configured to check whether a task instructed to the other automated work apparatus can be completed by itself, and if it is determined that the task can be completed, exchange its own task with a task of the other automated work apparatus and have the other automated work apparatus execute its own task and execute the task of the other automated work apparatus by itself.

9. A production system management method for managing a task of an automated work apparatus by issuing a task instruction to the automated work apparatus in a production system provided that includes a plurality of automated work apparatuses executing a task on at least one production apparatus, the automated work apparatuses including a robot that executes a task on the production apparatus, an automated guided vehicle that has the robot mounted thereon and moves to a work position set to the production apparatus, a control device that controls the automated guided vehicle and the robot, and a battery that supplies electric power, the method comprising:
monitoring a remaining battery power level of each automated work apparatus;
comparing a recognized remaining battery power level with a standard remaining power level required to complete an instructed task to check whether the instructed task can be completed;
if an automated work apparatus with an insufficient remaining battery power level that is below the standard remaining power level and is determined to be unable to complete the instructed task, searching for an automated work apparatus with a sufficient remaining battery power level that exceeds the standard remaining power level and is able to complete the instructed task; and
if an automated work apparatus with a sufficient remaining power level exists, instructing a task content instructed to an automated work apparatus with an insufficient remaining power level to an automated work apparatus with a sufficient remaining power level to have the automated work apparatus with an insufficient remaining power level take over the instructed task.

10. A program recording medium having a management device program used for a production system management device recorded thereon, the production system including: a plurality of automated work apparatuses that execute a task on at least one production apparatus; and a management device that issues a task instruction to the automated work apparatuses and manages a task of the automated work apparatuses, the automated work apparatuses including a robot that executes a task on the production apparatus; an automated guided vehicle that has the robot mounted thereon and moves to a work position set to the production apparatus; a control device that controls the automated guided vehicle and the robot, and a battery that supplies electric power,
the management device program being configured to execute:
a process of monitoring a remaining battery power level of each automated work apparatus;
a process of comparing a recognized remaining battery power level with a standard remaining power level required to complete an instructed task to check whether the instructed task can be completed;
if an automated work apparatus with an insufficient remaining battery power level that is below the standard remaining power level and is determined to be unable to complete the instructed task, a process of searching for an automated work apparatus with a sufficient remaining battery power level that exceeds the standard remaining power level and is able to complete the instructed task; and
if an automated work apparatus with a sufficient remaining power level exists, a process of instructing an automated work apparatus with a sufficient remaining power level to take over a task content instructed to an automated work apparatus with an insufficient remaining power level to have the automated work apparatus with a sufficient remaining battery take over the instructed task.
